# EUROPÄISCHE PATENTSCHRIFT

(11) **EP 2 565 139 B1**
(45) Veröffentlichungstag und Bekanntmachung des Hinweises auf die Patenterteilung: **08.02.2017**
(21) Anmeldenummer: 12004841.8
(22) Anmeldetag: 29.06.2012
(51) Int. Cl.: B65H 59/40, G01L 1/04, G01L 5/10

(54) **Fadenzugkraftsensor**
Yarn tension sensor
Capteur de force de traction de fil

(30) Priorität: 30.08.2011 DE 102011112012
(43) Veröffentlichungstag der Anmeldung: 06.03.2013
(73) Patentinhaber: Saurer Germany GmbH & Co. KG, 42897 Remscheid (DE)
(72) Erfinder: Hennig, Peter, 52525 Heinsberg (DE); Iding, Michael, 41169 Mönchengladbach (DE); Löwenfoss, Frank, 41372 Niederkrüchten (DE)

(56) Entgegenhaltungen:
- DE-A1- 3 942 341
- DE-A1- 19 531 448
- DE-C2- 19 716 134
- JP-A- H1 030 969
- JP-A- H10 197 372

## Beschreibung

Die Erfindung betrifft einen Fadenzugkraftsensor zur Messung der Fadenzugkraft eines laufenden Fadens, umfassend ein stabförmiges Kraftübertragungselement mit einem ersten Ende, das mit dem laufenden Faden in Wirkverbindung steht, Führungsmittel, welche mindestens eine Membrane umfassen und das stabförmige Kraftübertragungselement in seiner Bewegung in Richtung seiner Längsachse quer zur Laufrichtung des Fadens führen, Messmittel, die mit dem zweiten Ende des stabförmigen Kraftübertragungselements in Wirkverbindung stehen, Aufnahmemittel zur Aufnahme der Messmittel und ein Gehäuse, in dem das stabförmige Kraftübertragungselement, die Führungsmittel, die Messmittel und die Aufnahmemittel angeordnet sind.

Fadenzugkraftsensoren werden zum Beispiel in Spulmaschinen eingesetzt, die einen Faden von einer Ablaufspule, zum Beispiel einem Spinnkops, auf eine Auflaufspule, meistens eine Kreuzspule, wickeln. Für die Qualität der Auflaufspule ist die Einhaltung einer vorgegebenen Fadenspannung beziehungsweise Fadenzugkraft von entscheidender Bedeutung. Um die vorgegebene Fadenzugkraft einzuhalten, ist es bekannt, die Fadenzugkraft zu regeln. Dazu ist es erforderlich, die Fadenzugkraft mittels Fadenzugkraftsensoren zu messen.

Die DE 39 42 341 A1 offenbart einen Kraftsensor, insbesondere zum Überwachen der Spannung laufender Textilfäden, mit einem auf einem Biegekörper angeordneten veränderlichen elektrischen Widerstand, der Bestandteil eines Brückenteiles einer elektrischen Überwachungsschaltung ist. Der Biegekörper ist mit zwei einander entgegengesetzten Enden in einem aus einer festen Ausgangslage federnd verstellbaren Parallelführungsrahmen befestigt, der in einem ersten Eckbereich festgehalten und an einem diagonal entgegengesetzten zweiten Eckbereich der zu überwachenden Kraft ausgesetzt ist.

Die gattungsgemäße DE 197 16 134 C2 offenbart einen Fadenzugkraftsensor, bei welchem der unter Spannung stehende Faden an einem Umlenkungspunkt umgelenkt und die am Umlenkungspunkt quer zum Faden auftretende Kraft in eine Kraftmesseinrichtung eingeleitet und dort gemessen wird. Die Kraftmesseinrichtung weist einen plattenförmigen Kraftaufnehmer auf, dessen Mittelbereich als Membran ausgebildet ist und eine auf Dehnungen der Membran ansprechende piezoresistiv arbeitende Messbrücke trägt. Die zu messende Querkraft des Fadens wird in die Membran des Kraftaufnehmers eingeleitet. Zwischen dem Umlenkungspunkt und der Kraftmesseinrichtung ist zur thermischen Entkopplung des Umlenkungspunktes und der Kraftmesseinrichtung ein stabförmiges Kraftübertragungselement vorgesehen. Das stabförmige Kraftübertragungselement wird in membranförmigen Führungselementen geführt. Die Führungselemente sind randseitig in entsprechende Nuten in den Gehäusewänden eingeschoben und gelagert. Der plattenförmige Kraftaufnehmer sitzt ebenfalls in entsprechenden Nuten in den Gehäusewänden.

Wenn das Gehäuse des Fadenzugkraftsensors an einer Arbeitsstelle einer Spulmaschine oder an einer anderen Textilmaschine mit einem laufenden Faden montiert wird, kann es zu Verspannungen an dem Gehäuse kommen. Diese Verspannungen übertragen sich auf den Kraftaufnehmer. Durch diese Verspannung kann unmittelbar der Messwert der Messbrücke beeinflusst werden und damit zu Messfehlern führen. Ebenfalls ist es möglich, dass sich durch die Verspannungen der Kontaktpunkt zwischen dem Kraftübertragungselement und dem Kraftaufnehmer beziehungsweise der auf ihm befindlichen Messbrücke geringfügig verschiebt. Auch dadurch können Messfehler entstehen.

Es ist daher die Aufgabe der vorliegenden Erfindung, durch die Montage des Fadenzugkraftsensors bedingte Messfehler zu vermeiden.

Die Aufgabe wird erfindungsgemäß durch die kennzeichnenden Merkmale des Anspruches 1 gelöst. Vorteilhafte Weiterbildungen der Erfindung sind Gegenstand der Unteransprüche.

Zur Lösung der Aufgabe umfasst der Fadenzugkraftsensor Haltemittel zum Halten der Führungsmittel, die Haltemittel sind an dem Gehäuse befestigt und die Aufnahmemittel werden nur durch eine starre Verbindung mit den Haltemitteln gehalten.

Durch die erfindungsgemäße Lösung müssen die Aufnahmemittel, die das Messmittel aufnehmen, nicht mehr an dem Gehäuse befestigt werden, da sie durch die Verbindung mit den Haltemitteln, die die Führungsmittel des Kraftübertragungselementes halten, getragen werden. Die Aufnahmemittel werden also nicht mehr direkt sondern indirekt mit dem Gehäuse verbunden. Dadurch sind die Aufnahmemittel mit den Messmitteln von dem Gehäuse entkoppelt. Die Übertragungen von Verspannungen des Gehäuses auf die Aufnahmemittel kann weitestgehend vermieden werden. Da die Messmittel nicht über das Gehäuse, sondern über Aufnahmemittel, Haltemittel und Führungsmittel mit dem stabförmigen Kraftübertragungselement verbunden sind, kann der Kontaktpunkt zwischen dem Kraftübertragungselement und dem Messmittel nicht mehr verschoben werden. Durch die erfindungsgemäße Lösung können Messfehler, die durch montagebedingte Verspannungen des Gehäuses entstehen, vermieden werden.

Es ist besonders vorteilhaft, wenn die Befestigung der Haltemittel am Gehäuse ein Spiel aufweist. Die Haltemittel haben auch nach ihrer Montage in dem Gehäuse einen gewissen Bewegungsfreiraum. Damit können Verspannungen des Gehäuses auch nicht auf die Haltemittel übertragen werden und damit auch nicht indirekt auf die Aufnahmemittel.

Gemäß einer Weiterbildung der vorliegenden Erfindung sind die Haltemittel als zylinderförmige Hülse ausgebildet. Die Führungsmittel können dabei so ausgebildet sein, dass die Längsachse des stabförmigen Kraftübertragungselementes parallel zur Mantelfläche der zylinderförmigen Hülse angeordnet ist. Vorteilhafterweise weist das Gehäuse eine der Hülse entsprechende zylinderförmige Aussparung zur Aufnahme der zylinderförmigen Hülse auf. Die zylinderförmige Hülse ist dabei gleitend axial in die Aussparung einschiebbar und kann in Richtung der Längsachse des stabförmigen Kraftübertragungselementes fixiert werden.

Quer zur Längsachse des stabförmigen Kraftübertragungselementes ist eine zusätzliche Fixierung der Hülse gegen eine Verschiebung nicht erforderlich. Durch die Anordnung der Hülse in der Aussparung des Gehäuses und die Fixierung in Längsrichtung wird die Hülse ausreichend gehalten. Diese Anordnung hat den Vorteil, dass quer zu Längsachse des Kraftübertragungselementes Kräfte aufgenommen werden können, die im Gegensatz zum Stand der Technik die Messung nicht verfälschen. Solche Kräfte können zum Beispiel durch den laufenden Faden ausgeübt werden. Durch diese Art der Befestigung der als Hülse ausgebildeten Haltemittel können Querkräfte ohne unerwünschte Auswirkungen auf die Messung aufgenommen werden, da die Messmittel durch die erfindungsgemäße Kopplung eine geringe Lageveränderung der Hülse mit ausführen.

Gemäß einer vorteilhaften Ausführungsform enthalten die Messmittel ein Verformungselement, das durch die Wechselwirkung mit dem stabförmigen Kraftübertragungselement verformbar ist.

Das Verformungselement kann zum Beispiel als Biegebalken ausgebildet sein.

Die Messmittel können ein Messelement enthalten, dessen spezifischer Widerstand sich bei Verformung ändert, wobei das Messelement auf dem Verformungselement integriert ist. Das Messelement kann einen piezoresistiven Halbleiter beinhalten. Das Messelement kann auch als Dehnungsmesstreifen ausgebildet sein.

Um die Widerstandsänderung des Messelementes und damit die Verformung des Verformungselementes zu erfassen, können die Messmittel eine Wheatstonebrücke zur Messung des Widerstandes des Messelements aufweisen. Aus der Verformung des Verformungselementes kann die Fadenzugkraft abgeleitet werden.

Gemäß einer alternativen Ausführungsform umfassen die Messmittel einen Positionssensor, der die Position des stabförmigen Kraftübertragungselementes detektiert. Die Position des Kraftübertragungselementes gibt Aufschluss über die Fadenzugkraft. Der Positionssensor kann zum Beispiel als Hallsensor ausgebildet sein.

Vorzugsweise ist die mindestens eine Membrane so ausgebildet, dass das stabförmige Übertragungselement ohne Kontakt mit dem Faden in einer definierten Stellung gehalten wird.

Die mindestens eine Membrane ist vorteilhafterweise aus einem Polycarbonat hergestellt. Membranen aus Polycarbonat sind unempfindlich und formstabil. Die Membranen können dabei so gefertigt werden, dass diese eine hohe Rückstellkraft ausüben können. Dadurch wird das stabförmige Übertragungselement in eine definierte Stellung überführt und gehalten, sobald der Faden keine Kraft auf das Übertragungselement mehr ausübt.

Die Erfindung wird nachfolgend anhand eines in den Zeichnungen dargestellten Ausführungsbeispiels näher erläutert.

Es zeigen:
- Fig. 1: einen erfindungsgemäßen Fadenzugkraftsensor in Seitenansicht;
- Fig. 2: den Fadenzugkraftsensor aus Fig. 1 in perspektivischer Darstellung als Explosionszeichnung.

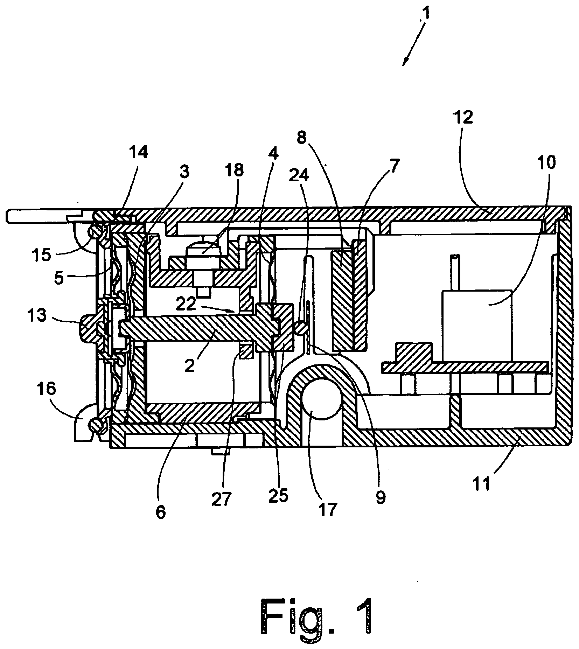

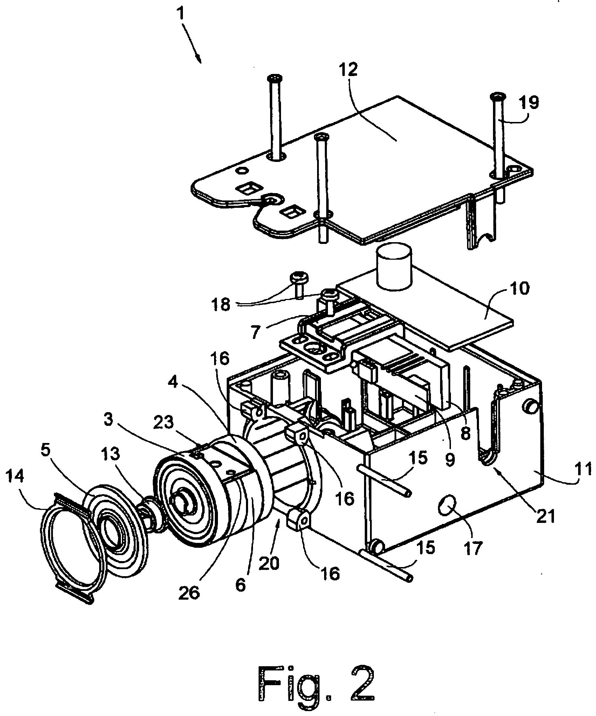

Die Figuren 1 und 2 zeigen einen erfindungsgemäßen Fadenzugkraftsensor 1 zur Verwendung an einer Arbeitsstelle einer Spulmaschine. Der Fadenzugkraftsensor 1 weist ein Gehäuse 11 mit einem Gehäusedeckel 12 auf. Der Gehäusedeckel 12 kann mit dem Gehäuse 11 mittels der Nieten 19 fest verbunden werden. Das Gehäuse weist eine Bohrung 17 auf. Mittels der Bohrung 17 und einer passenden Schraube kann das Gehäuse 11 des Fadenzugkraftsensors 1 an dem Rahmen einer Arbeitsstelle einer Spulmaschine befestigt werden. Das Gehäuse 21 weist außerdem eine Öffnung 21 zur Durchführung der elektrischen Anschlüsse auf. Neben den im Folgenden noch näher beschriebenen erfindungswesentlichen Bestandteilen ist dem Gehäuse eine Auswerteelektronik 10 angeordnet.

Der Fadenzugkraftsensor 1 weist ein stabförmiges Kraftübertragungselement 2 auf. Die beiden Membranen 3 und 4 fungieren als Führungsmittel für das Kraftübertragungselement 2. Die Membrane werden von der Hülse 6 gehalten und sind mit dieser fest verbunden. Im Bereich der Membran 4 weist die Hülse 6 außerdem eine speichenartige Anordnung 27 mit einer Bohrung 22 in der Mitte. Durch die Bohrung 22 wird das Kraftübertragungsmittel 2 zusätzlich geführt.

Die Membrane 3 und 4 sind aus Polycarbonat gefertigt, so dass sie das Kraftübertragungselement 2 in eine definierte Position überführen können, wenn der Faden keine Kraft auf das Kraftübertragungselement 2 ausübt.

Der dargestellte Fadenzugkraftsensor 1 weist einen Biegebalken 9 mit integrierter piezoresistiver Wheatstone-Brücke auf. Der Biegebalken 9 dient als Messmittel. Als Kontaktpunkt zu dem Kraftübertragungselement 2 dient die Messkugel 24. Beim Betrieb des Fadenzugkraftsensors 1 berührt die Messkugel 24 den Aufsatz 25, der auf die Membrane 4 so aufgebracht ist, dass die Kraft von dem Kraftübertragungselement 2 weitergeleitet wird. Der Biegebalken 9 ist mit dem einen Ende auf eine Glasplatte 8 geklebt. Die Glasplatte 8 wiederum ist mit dem Bügel 7 fest verbunden. Die Glasplatte 8 und der Bügel 7 bilden das Aufnahmemittel für den Biegebalken 9. Die Hülse 6 weist ein Plateau 23 mit Gewindebohrungen 26, auf dem der Bügel 7 mittels der Schrauben 18 befestigt werden kann.

Das Gehäuse 11 weist eine Aussparung 20 auf, die so geformt ist, dass sie der Form der Hülse 6 entspricht und diese aufnehmen kann. Die Hülse 6 kann somit in die Aussparung 20 eingeschoben werden. Auf dem fadenseitigen Ende des Kraftübertragungselementes 2 wird die Messöse 13 angeordnet, an der im Betrieb des Fadenzugkraftsensors der Faden vorbeiläuft. Darüber folgt eine Schutzmembrane 5, die die Führungsmembran 3 abdeckt und das innere des Fadenzugkraftsensors 1 vor Staub und Faserflug schützt. Über die Schutzmembrane 5 wird ein Haltering 14 angeordnet. Dieser wird mittels der Stifte 15 verdrehsicher fixiert, wobei Stifte 15 durch Führungsösen 16 am Gehäuse geschoben werden. Durch die Fixierung des Halteringes ist die Hülse 6 in axialer Richtung, das heißt, quer zur Fadenlaufrichtung, fixiert.

## Patentansprüche

1. Fadenzugkraftsensor (1) zur Messung der Fadenzugkraft eines laufenden Fadens, umfassend
- ein stabförmiges Kraftübertragungselement (2) mit einem ersten Ende, das mit dem laufenden Faden in Wirkverbindung steht,
- Führungsmittel (3, 4), welche mindestens eine Membrane umfassen und das stabförmige Kraftübertragungselement (2) in seiner Bewegung in Richtung seiner Längsachse quer zur Laufrichtung des Fadens führen,
- Messmittel (9), die mit dem zweiten Ende des stabförmigen Kraftübertragungselements (2) in Wirkverbindung stehen,
- Aufnahmemittel (7, 8) zur Aufnahme der Messmittel,
- ein Gehäuse (11), in dem das stabförmige Kraftübertragungselement (2), die Führungsmittel (3,4), die Messmittel (9) und die Aufnahmemittel (7, 8) angeordnet sind,
**dadurch gekennzeichnet,**
**dass** der Fadenzugkraftsensor (1) Haltemittel (6) zum Halten der Führungsmittel (3, 4) umfasst,
**dass** die Haltemittel (6) an dem Gehäuse (11) befestigt sind und
**dass** die Aufnahmemittel (7, 8) nur durch eine starre Verbindung mit den Haltemitteln (6) gehalten werden.

2. Fadenzugkraftsensor (1) nach Anspruch 1, **dadurch gekennzeichnet, dass** die Befestigung der Haltemittel (6) am Gehäuse (11) ein Spiel aufweist.

3. Fadenzugkraftsensor (1) nach einem der vorherigen Ansprüche, **dadurch gekennzeichnet, dass** die Haltemittel als zylinderförmige Hülse (6) ausgebildet sind.

4. Fadenzugkraftsensor (1) nach Anspruch 3, **dadurch gekennzeichnet, dass** die Führungsmittel (3, 4) so ausgebildet sind, dass die Längsachse des stabförmigen Kraftübertragungselementes (2) parallel zur Mantelfläche der zylinderförmigen Hülse (6) angeordnet ist.

5. Fadenzugkraftsensor (1) nach Anspruch 4, **dadurch gekennzeichnet, dass** das Gehäuse (11) eine der Hülse (6) entsprechende zylinderförmige Aussparung (20) zur Aufnahme der zylinderförmigen Hülse (6) aufweist.

6. Fadenzugkraftsensor (1) nach Anspruch 5, **dadurch gekennzeichnet, dass** die zylinderförmige Hülse (6) in Richtung der Längsachse des stabförmigen Kraftübertragungselementes (2) fixiert ist.

7. Fadenzugkraftsensor (1) nach einem der vorherigen Ansprüche, **dadurch gekennzeichnet, dass** die Messmittel ein Verformungselement (9) enthalten, das durch die Wechselwirkung mit dem stabförmigen Kraftübertragungselement (2) verformbar ist.

8. Fadenzugkraftsensor (1) nach Anspruch 7, **dadurch gekennzeichnet, dass** das Verformungselement als Biegebalken (9) ausgebildet ist.

9. Fadenzugkraftsensor (1) nach Anspruch 7 oder 8, **dadurch gekennzeichnet, dass** die Messmittel ein Messelement enthalten, dessen spezifischer Widerstand sich bei Verformung ändert, und dass das Messelement auf dem Verformungselement (9) integriert ist.

10. Fadenzugkraftsensor (1) nach Anspruch 9, **dadurch gekennzeichnet, dass** das Messelement einen piezoresistiven Halbleiter beinhaltet.

11. Fadenzugkraftsensor (1) nach Anspruch 9, **dadurch gekennzeichnet, dass** das Messelement als Dehnungsmesstreifen ausgebildet ist.

12. Fadenzugkraftsensor (1) nach einem der Ansprüche 9 bis 11, **dadurch gekennzeichnet, dass** die Messmittel eine Wheatstonebrücke zur Messung des Widerstandes des Messelements aufweisen.

13. Fadenzugkraftsensor (1) nach einem der Ansprüche 1 bis 6, **dadurch gekennzeichnet, dass** die Messmittel einen Positionssensor umfassen, der die Position des stabförmigen Kraftübertragungselementes (2) detektiert.

14. Fadenzugkraftsensor (1) nach Anspruch 13, **dadurch gekennzeichnet, dass** der Positionssensor als Hallsensor ausgebildet ist.

15. Fadenzugkraftsensor (1) nach einem der vorherigen Ansprüche, **dadurch gekennzeichnet, dass** die mindestens eine Membrane so ausgebildet ist, dass das stabförmige Übertragungselement ohne Kontakt mit dem Faden in einer definierten Stellung gehalten wird.

16. Fadenzugkraftsensor (1) nach einem der vorherigen Ansprüche, **dadurch gekennzeichnet, dass** die mindestens eine Membrane aus einem Polycarbonat hergestellt ist.

## Claims

1. Yarn tension sensor (1) for measuring the yarn tension of a running thread, comprising
- a rod-like force transmission element (2) having a first end which is in operative connection with the running thread,
- guide means (3, 4), which comprise at least one membrane and guide the rod-like force transmission element (2) in its movement in the direction of its longitudinal axis perpendicular to the running direction of the thread,
- measuring means (9), which are in operative connection with the second end of the rod-like force transmission element (2),
- accommodating means (7, 8) for mounting the measuring means,
- a housing (11), in which the rod-like force transmission element (2), the guide means (3, 4), the measuring means (9) and the accommodating means (7, 8) are arranged,
**characterised in that**
the yarn tension sensor (1) comprises holding means (6) for holding the guide means (3,4),
the holding means (6) are secured onto the housing (11) and
the accommodating means (7, 8) are only held by a rigid connection with the holding means (6).

2. Yarn tension sensor (1) according to claim 1, **characterised in that** the fastening of the holding means (6) to the housing (11) allows for play.

3. Yarn tension sensor (1) according to any of the preceding claims, **characterised in that** the holding means are designed as a cylindrical casing (6).

4. Yarn tension sensor (1) according to claim 3, **characterised in that** the guide means (3, 4) are designed so that the longitudinal axis of the rod-like force transmission element (2) is arranged parallel to the casing surface of the cylindrical casing (6).

5. Yarn tension sensor (1) according to claim 4, **characterised in that** the housing (11) has a cylindrical recess (20) corresponding to the casing (6) for mounting the cylindrical casing (6).

6. Yarn tension sensor (1) according to claim 5, **characterised in that** the cylindrical casing (6) is fixed in the direction of the longitudinal axis of the rod-like force transmission element (2).

7. Yarn tension sensor (1) according to any of the preceding claims, **characterised in that** the measuring means contain a deformation element (9) which can be deformed by the interaction with the rod-like force transmission element (2).

8. Yarn tension sensor (1) according to claim 7, **characterised in that** the deformation element is designed as a bending bar (9).

9. Yarn tension sensor (1) according to claim 7 or 8, **characterised in that** the measuring means comprise a measuring element, the specific resistance of which changes during deformation and **in that** the measuring element is integrated onto the deformation element (9).

10. Yarn tension sensor (1) according to claim 9, **characterised in that** the measuring element contains a piezoresistive semi-conductor.

11. Yarn tension sensor (1) according to claim 9, **characterised in that** the measuring element is designed as a strain gauge.

12. Yarn tension sensor (1) according to any one of claims 9 to 11, **characterised in that** the measuring means comprise a Wheatstone bridge for measuring the resistance of the measuring element.

13. Yarn tension sensor (1) according to any one of claims 1 to 6, **characterised in that** measuring means comprise a position sensor, which detects the position of the rod-like force transmission element (2).

14. Yarn tension sensor (1) according to claim 13, **characterised in that** the position sensor is designed as a Hall sensor.

15. Yarn tension sensor (1) according to any of the preceding claims, **characterised in that** the at least one membrane is designed so that the rod-like transmission element is held in a defined position without contacting the thread.

16. Yarn tension sensor (1) according to any of the preceding claims, **characterised in that** the at least one membrane is made from a polycarbonate.

## Revendications

1. Capteur (1) de force de traction de fil, destiné à mesurer la force de traction d'un fil circulant, comprenant
- un élément (2) de transmission de force en forme de tige, avec une première extrémité qui se trouve en liaison fonctionnelle avec le fil circulant,
- des moyens de guidage (3, 4), qui comprennent au moins une membrane et guident l'élément (2) de transmission de force en forme de tige dans son mouvement dans la direction de son axe longitudinal, transversalement à la direction de circulation du fil,
- des moyens de mesure (9), qui se trouvent en liaison fonctionnelle avec la deuxième extrémité de l'élément (2) de transmission de force en forme de tige,
- des moyens de réception (7, 8) pour recevoir les moyens de mesure,
- un boîtier (11), dans lequel sont disposés l'élément (2) de transmission de force en forme de tige, les moyens de guidage (3, 4), les moyens de mesure (9) et les moyens de réception (7, 8),
**caractérisé en ce que** le capteur (1) de force de traction de fil comprend des moyens de maintien (6) pour maintenir les moyens de guidage (3, 4),
**en ce que** les moyens de maintien (6) sont fixés sur le boîtier (11),
et **en ce que** les moyens de réception (7, 8) sont maintenus uniquement par une liaison rigide avec les moyens de maintien (6).

2. Capteur (1) de force de traction de fil selon la revendication 1, **caractérisé en ce que** la fixation des moyens de maintien (6) sur le boîtier (11) présente un jeu.

3. Capteur (1) de force de traction de fil selon l'une des revendications précédentes, **caractérisé en ce que** les moyens de maintien sont réalisés sous la forme d'un manchon cylindrique (6).

4. Capteur (1) de force de traction de fil selon la revendication 3, **caractérisé en ce que** les moyens de guidage (3, 4) sont conçus de telle sorte que l'axe longitudinal de l'élément (2) de transmission de force en forme de tige est disposé parallèlement à la surface d'enveloppe du manchon cylindrique (6).

5. Capteur (1) de force de traction de fil selon la revendication 4, **caractérisé en ce que** le boîtier (11) présente un évidement cylindrique (20), correspondant au manchon (6) et destiné à recevoir le manchon cylindrique (6).

6. Capteur (1) de force de traction de fil selon la revendication 5, **caractérisé en ce que** le manchon cylindrique (6) est fixé en position dans la direction de l'axe longitudinal de l'élément (2) de transmission de force en forme de tige.

7. Capteur (1) de force de traction de fil selon l'une des revendications précédentes, **caractérisé en ce que** les moyens de mesure contiennent un élément de déformation (9) qui peut être déformé par l'interaction avec l'élément (2) de transmission de force en forme de tige.

8. Capteur (1) de force de traction de fil selon la revendication 7, **caractérisé en ce que** l'élément de déformation est réalisé sous forme de poutre de flexion (9).

9. Capteur (1) de force de traction de fil selon la revendication 7 ou 8, **caractérisé en ce que** les moyens de mesure contiennent un élément de mesure dont la résistance spécifique se modifie lors de la déformation, et **en ce que** l'élément de mesure est intégré sur l'élément de déformation (9).

10. Capteur (1) de force de traction de fil selon la revendication 9, **caractérisé en ce que** l'élément de mesure contient un semi-conducteur piézorésistif.

11. Capteur (1) de force de traction de fil selon la revendication 9, **caractérisé en ce que** l'élément de mesure est réalisé sous forme de jauge extensométrique.

12. Capteur (1) de force de traction de fil selon l'une des revendications 9 à 11, **caractérisé en ce que** les moyens de mesure présentent un pont de Wheatstone pour la mesure de la résistance de l'élément de mesure.

13. Capteur (1) de force de traction de fil selon l'une des revendications 1 à 6, **caractérisé en ce que** les moyens de mesure comprennent un capteur de position, qui détecte la position de l'élément (2) de transmission de force en forme de tige.

14. Capteur (1) de force de traction de fil selon la revendication 13, **caractérisé en ce que** le capteur de position est réalisé sous forme de capteur à effet Hall.

15. Capteur (1) de force de traction de fil selon l'une des revendications précédentes, **caractérisé en ce que** la membrane au moins unique est conçue de telle sorte que l'élément de transmission en forme de tige est maintenu dans une position définie sans contact avec le fil.

16. Capteur (1) de force de traction de fil selon l'une des revendications précédentes, **caractérisé en ce que** la membrane au moins unique est fabriquée en un polycarbonate.
